Europäisches Patentamt

European Patent Office

Office européen des brevets

(11) Publication number: **0 358 408**
**A2**

## EUROPEAN PATENT APPLICATION

(21) Application number: 89308813.8

(22) Date of filing: 31.08.89

(51) Int. Cl.5: **H04Q 3/00**

(30) Priority: 06.09.88 US 240882

(43) Date of publication of application:
**14.03.90 Bulletin 90/11**

(84) Designated Contracting States:
**BE DE ES FR GB IT NL SE**

(71) Applicant: **AMERICAN TELEPHONE AND TELEGRAPH COMPANY**
**550 Madison Avenue**
**New York, NY 10022(US)**

(72) Inventor: **Azizi, Alireza**
**28 Riverside Avenue Apt. 4L**
**Red Bank New Jersey 07701(US)**
Inventor: **Pezzutti, David August**
**20 Renier Court**
**Middletown New Jersey 07748(US)**

(74) Representative: **Buckley, Christopher Simon Thirsk et al**
**AT&T (UK) LTD. AT&T Intellectual Property Division 5 Mornington Road**
**Woodford Green, Essex IG8 OTU(GB)**

(54) **Intelligent network.**

(57) A system invention for an intelligent network architecture for implementing applications and information services, and providing services capabilities in a distributed fashion is disclosed. The concept behind the invention is of universal flexibility through architectural diversity to distribute service functionality anywhere within the network.

This invention to implements both services and applications. The term service refers to a control arrangement involving a collection of service capabilities which are bundled in a meaningful manner and which have been tariffed by the Network Service Provider. The term application refers to an untariffed control process which utilizes a collection of tariffed service capabilities implemented using Computer Inquiry-III ONA concepts. Applications can be implemented by the Network Service Provider, by customers, or by third party service providers.

In this invention, a programmable Application Management Control Layer (AMC) is introduced into the network architecture to implement the applications processes. This layer is comprised of two environments: the ASME and ASCE. The processes within this layer provide control of both network and non-network service elements to perform application-specific work. A network operating system provides network services, control, connectivity and communications. It binds the environments together to implement a distributed application. This network operating system is termed the Network Services Environment (NSE). Billing is provided in a flexible manner, in either a usage sensitive manner for the service element resources utilized or through fixed charges, or both.

The NSE is capable of providing resources and computing interworking services required to network the service elements together at session time. The term interwork relates to the capability of each protocol layer of the interface of one element to communicate with the corresponding layer of the interface of the connected element.

The NSE is provided with several types of broker functions. The first type of broker selects a service application provider based on criteria established by the user. The second type of broker, locates and reserves service elements in response to a request from the ASCE process which identifies its resource needs. Combined with Open Network Architecture principles, this network design supports the needs of both third party service providers and network service providers. The third type of broker is automatically invoked by the intelligent network to provide interworking services to network together all required resources at run time.

When combined with expert systems technology, the network can be arranged to utilise learning

system technology to improve the quality of service over time with experience.

The advantage of this invention is that it implements a virtual network providing enriched services and applications by networking multiple service elements under control of an applications control process. Network services and service capabilities support the intelligent network described herein.

## Intelligent Network

### Technical Field

This invention relates to the field of intelligent networks designed for the support and creation of enriched services and, more particularly, enables value-added information services to be controlled by application processes. While the current regulatory climate prohibits some network service providers from becoming information providers, they are not currently prohibited from adding service value or from providing applications control for information services. The intelligent network described permits value-added information services to be controlled by applications processes. Numerous service applications examples can be cited to illustrate the value of this approach. These include, but are not limited to, the fields of Office Automation, ACD/MIS (Automatic Call Distributor/Managment Information System) functions, Operations Administration and Maintenance, Personal Services, and applications control of workplace functions. A highly customizable intelligent network in which user service and application needs can be customized is of high value to users, to network service providers, and to third party providers.

In this invention, an Application Management Control (AMC) Layer and Network Operating System are introduced into the network design. It has two environments: the Applications Services Management Environment (ASME), and the Applications Services Control Environment (ASCE).

Contained within the ASME are numerous Customer Service Environments (CSE). The CSE resides within the network, while the ASCE can, but need not, reside within the network.

This invention specifically introduces the ASME and ASCE layers above the layer seven of the Open System Interconnect (OSI) Reference Model. OSI principles are used to compute interworking needs between service elements.

### Background of the Invention

The concept of automating routine procedures has long been recognized to provide value for office workers who have had to perform repetitive operations. This type of automation most frequently is accomplished by designing a custom computer program to facilitate the tasks. Office services including word processing, order entry, and so forth, fall into this category of automated services.

The current telecommunications networks implement several forms of service processing including integrated call processing by using associated data base call processing for WATS and Advanced 800 services, and by using applications processors for dedicated applications services such as message services, off line processing of billing, directory, and the like.

One disadvantage of these implementations is that each is well suited for only a limited class of services. They are not well suited to support distributed services. Most are only upgraded for new services during scheduled vendor generic release - often years after initial service conception.

The current network designs provide basic transport services. Only a few more complex value-added services are offered. Those that do provide them involve some form of virtual network, centrex offering, and conferencing. None of the existing systems provide the ability to compute interworking needs and to satisfy them from a general description of the end point interface requirements.

None of the existing network systems provide for the portability of applications and service capabilities to different control environments or nodes.

None of the existing network systems provide for service configurations to be assembled in response to a resource request from the AMC process with the topology being specified by the AMC process.

None of the existing network systems provide for brokering for service provider selection based upon implicit request utilizing service criteria specified by the customer.

None of the existing network systems provide for the network to compute interworking needs and automatically invoke a broker to establish the network.

### 1. Field of the Invention

The foregoing problems are solved in this invention by introducing a Network Service Environment (NSE) and an Application Management Control (AMC) layer above layer seven of the Open System Interconnect (OSI) model. In the embodiment of the invention, the AMC layer consists of two parts: The Applications Service Management Environment (ASME) and the Applications Services Control Environment (ASCE). The Customer Service Environment (CSE) (within the ASME) provides the User Agent control process which manages services in accordance with the user's directives stored in a data base known as the user profile.

The Application Services Control Environment (ASCE) provides a plurality of applications control processes which may be freely and widely distributed throughout multiple nodes of the architecture. These processes are programmable and they can have several levels of open access. The system, group, and individual levels are all supported. The system level is the most public with access being provided through a System Application Profile Directory (SAPD). Group level processes are available to users assigned group membership and the appropriate Group Application Profile Directory (GAPD). Individual level processes are private and access to these is provided by the Individual Application Profile Directory (IAPD).

Currently, the applications control and extended data base management architectures are implementation specific and do not support the full concept of architectural freedom which relates to the ability to freely distribute services functionality throughout the architecture.

The Customer Service Environment (CSE) implements a control environment which acts as applications process initiator and routes messages to the distributed control processes invoked by the user. The CSE transforms the profile data bases into efficient message routing tables for transmission to the applications processes. The functions of the User Agent are to select and initiate these applications processes and to faithfully route messages to them for processing.

The ASME communicates with the ASCE through message transactions which distribute event occurrence information as well as data to the running applications.

The ASCE communicates with the ASME through message transactions to provide control information to the basic network as well as to other applications which are running. The ASCE may request that services capabilities be located and reserved for it by the Network Services Environment (NSE) which provides another broker service. The ASCE may then request that a virtual network configuration of service elements both from network and other providers be constructed by the NSE. As an example, a user may request a distributed conference call be set up and that it be cost-efficient. This may entail the use of several controllable voice bridges and transmission links supplied by a preferred Inter Exchange Carrier as specified in the user profile data base.

The network herein disclosed can respond to the requests from the ASCE to network the service elements by using Open System Interconnect (OSI) principles. The term "network" can mean the interconnection of both information and control interfaces in accordance with the topological specification. After the specification is received, a mathematical model termed the Network Transform is utilized to compute the interworking needs. When the transform is computed for each link, the service elements are connected with the necessary transport and protocol conversion to provide for interworking between them. Thus, a virtual service network configuration for the ASCE process is created by the Network Services Environment (NSE). Other methods can be used for networking the service elements into a services network.

One method of providing interworking of the service elements can be by providing transport between the designated information and control ports of the elements.

Another method of providing interworking of the service elements can be by providing the Application Service Control Environment (ASCE) process with the control and information port addresses for each element which the ASCE process can use to configure the service arrangement by transmitting destination addresses to each network element to configure the virtual services network. Thus, each network service element port may be connected by a virtual circuit to its destination port utilizing packet or statistical transport systems such as provided by local, metropolitan, or wide area networks.

When combined with expert learning system technology, the Network Service Environment (NSE) can utilize a knowledge data base to favorably bias the selection of previously satisfactory arrangements, and bias against the selection of unsatisfactory arrangements.

The Application Services Control Environment (ASCE) process continues to execute for the user as long as desired or until service application completion occurs.

Concurrency and redundancy is supported for reliability and performance. When it is desired that redundant control processes execute, command resolution is provided by a Resolver Function of the User Agent to reconcile conflicting directives from ASCE processes in different locations.

Architectural diversity is provided through the implementation of a uniform service execution environment. Thus applications written for one environment can be moved or ported to another. Only the Application Profile Directories (APD) require change to provide access to multiple ASCE process sites.

Rapid application prototyping and distribution are supported through the architectural diversity. When a new service is created and is to be deployed by the service provider, the Application Profile Directories (APD's) are updated. After the operation of the application has been finalized, and as demand for the application increases, copies of the Application Services Control Environment (ESCE) may be distributed to other architecture sites, as needed, to handle the traffic demand for the service.

The Application Services Control Environment (ASCE) can be provided by any of several nodes. These can include, the service node also called the switching node or operations, the central data base processor (NCP/SCP), the feature node (applications processor), or the customer location equipment termed the customer node.

The multiple architectural nodes can support the ASCE using the applicable protocol drivers which transport messages as required. Examples of these protocols can include Signaling System 7, and ISDN (Integrated Service Digital Network) Q.931 signaling protocols and the like.

The Applications Service Management Environment (ASME) with the Customer Service Environment (CSE) can be integrated into the switches of the network, such as the Electronics Switching Systems, Private Branch Exchanges (PBXs such as the Systems 75-85), or Local Area Network (LAN) products offered by AT&T.

This architecture is designed to provide maximum freedom to the Network Service Provider (NSP) to configure the network in whatever manner desired for business reasons. Open Network Architecture (ONA) principles are used at the interface between the ASCE and the ASME to allow third party providers and customers to offer various applications. In the current network architectures, this interface is currently being provided by many separate control protocols which are not totally open. Network proprietary services can be provided through an interface which is not open for reasons of performance and network security.

This invention provides for the implementation of a Network Services Environment (NSE) that provides for the life cycle management of each service element and component. A service element may have hundreds or thousands of current users at any instant of time and, therefore, must not be removed from service until it has become service idle. The Network Services Environment (NSE) will allow for the installation and removal of all service elements without causing service disruption.

## Brief Description of the Drawing

FIG. 1 illustrates the system level view of the application management control layer of the intelligent network architecture;

FIG. 2 illustrates the physical implementation of the invention where a Number 5 ESS is coupled, through an interface, to permit the Network Service Environment (NSE) to support the ASME with its Customer Service Environment and the Application Services Control to permit the Network Service Environment (NSE) to support the ASME with its Customer Service Environment and the Application Services Control Environment located in the Applications Management Control layer of the network;

FIG. 3 illustrates the data base profile architecture of the network;

FIG. 4 illustrates the form of the System Application Profile Directory which is also representative of the Group Application Profile Directory and the Individual Application Profile Directory;

FIG. 5 illustrates the customer User Subscription Table (UST) for five subscribed applications.

FIG. 6 illustrates the User Event Trigger Table (UETT);

FIG. 7 illustrates the maintenance cycle to which the service elements and applications adhere;

FIG. 8 illustrates a model of the network transform;

Figs. 9-14 illustrate the logical control provided by the User Agent in the .Customer Service Environment, the Application Services Control Environment process and the Network Services Environment response to resource and network requests.

## Detailed Description

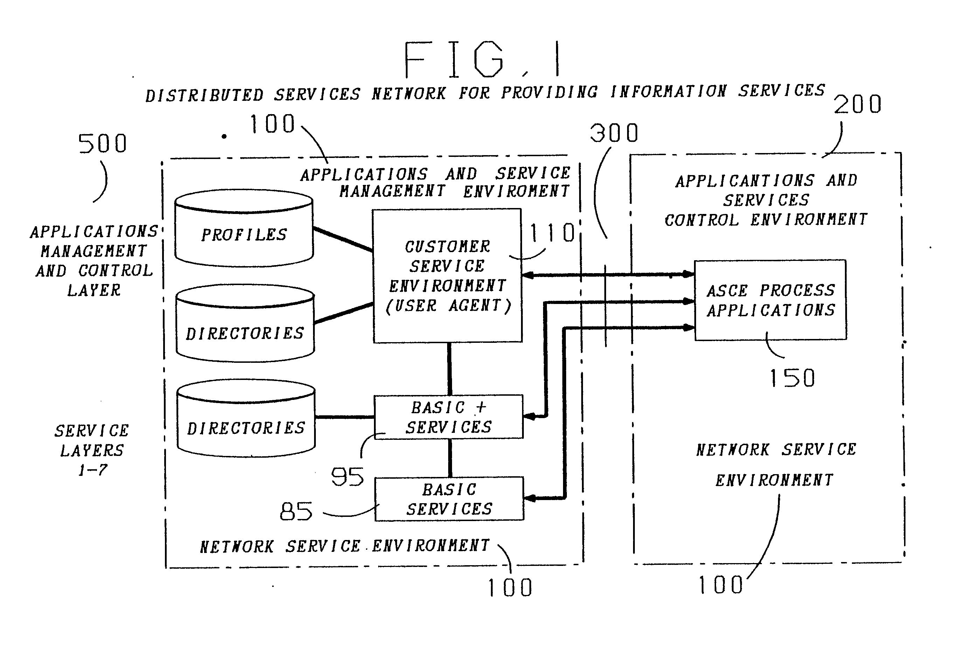

Referring to FIG. 1, illustrated is the application management control layer 500, which consists of two parts. These are the Application Service Management Environment (110) containing the Customer Service Environment (CSE) and the Application Services Control Environment (ASCE) 200. A uniform interface 300, is provided between the ASME and ASCE. The CSE provides the necessary AMC layer intelligence and profiles data base for the invention to control the access to services and applications. These functions are located in the Service Node, 100.

The Application Services Control Environment (ASCE) 200, provides the applications creation and execution environment for the applications customization and programmability. The process applications 150, are shown as being in the ASCE. The ASCE can be located in a variety of nodes of the network such as the Service Node, Feature Node, Network Centralized Data Base, or Customer Node, or be implemented from any other node of the network. Because Open Network Architecture (ONA) principles are used between the network and the ASCE 300, the ASCE can be owned and operated by any business entity or by an end customer.

The Network Service Environment (NSE) 100, provides the environment and utilities to support the applications and the life cycle management for the Network Service Provider. It can be constructed using a real time operating system which can include UNIX and ORYX/PECOS (Operating Systems of AT&T).

Basic Services 85, and Basic + Services, 95, provide the needed service functionality required to allow the Customer Service Environment (CSE) and the ASCE processes to operate.

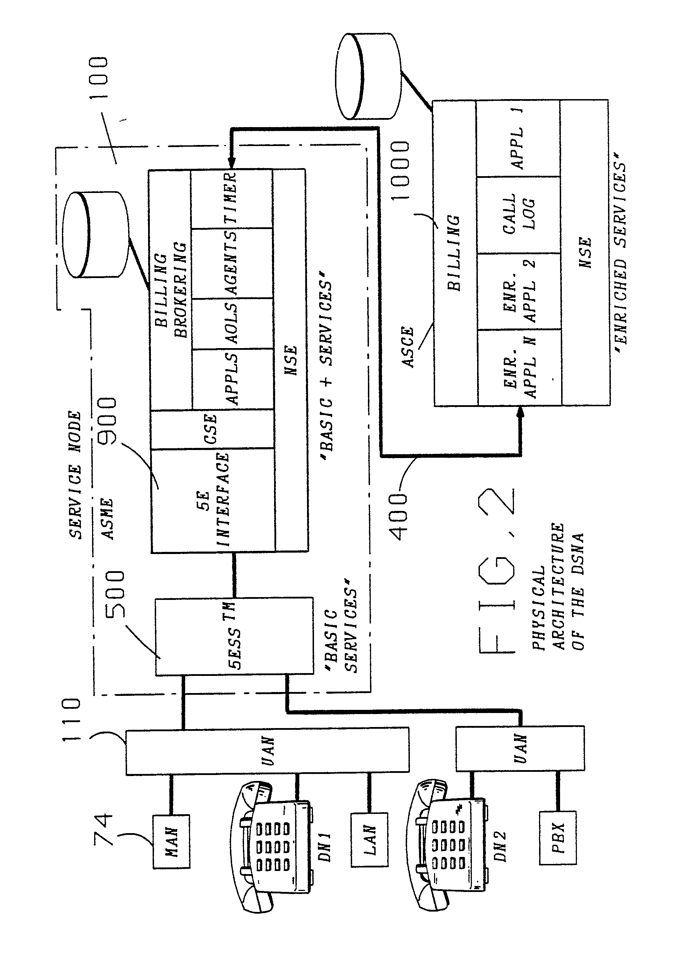

FIG. 2 illustrates the physical implementation of the invention. Basic services can be provided by existing network elements such as the 5ESS, conference bridges, DACS (Digital Access Cross Connect System), SLC (Subscriber Loop Carrier) and Lightwave transmission products. In this invention, the new Network Services Environment (NSE) and Customer Service Environment (CSE) with the Application Profile Directories (APD) and profiles are implemented on an adjunct processor. Ideally, these functions would be embedded within the service node and would run in the program environment of the host service machine. The network transform function, services provider brokering, service element brokering, billing, subscription, timing components, and the like are provided by this environment.

The interfaces between the Application Services Control Environment (ASCE) and the Customer Service Environment (CSE) can take many forms depending on the specific node functionality being supported. For example, the Feature Node (FN) is functionally supported by an ISDN Basic Rate Interface (BRI) or Primary Rate Interface (PRI) utilizing a message protocol suited to the service node generic. The interface rates will alter the performance of the application and services and, therefore, would normally be specified.

Through the open interface 400, messages are exchanged using a variety of protocols for the Application Services Control Environment (ASCE) to implement the Application Management Control (AMC) layer functionality. This interface may entail use of SS7, Q.931, ISDN BRI and PRI, or direct memory access techniques for messaging. Hence, enriched services can be implemented in a variety of network nodes.

Programmability of applications is supported within the ASCE by the use of applications oriented languages and compilers, and through the use of the Network Services Environment (NSE) which limits the effects of any ASCE process on any other process. Examples of these processes are call logging in real time by class of call, enriched display functions, selective all forwarding with priority override, and the like.

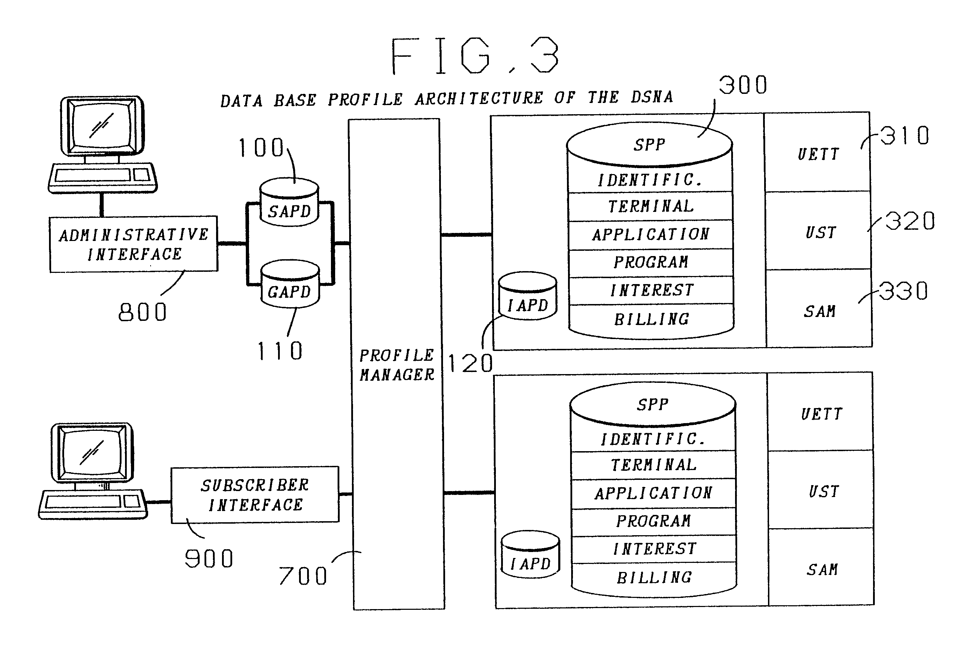

Profiles provide the extensive customer data bases required for operation. These are further expanded in FIG. 3.

Directories are provided at the system level 100, the group level 110 and the individual level 120. The Customer Service Environment (CSE) supports the User Agent which utilizes the customer data base profile. The Subscriber personal profile (SPP) 300 contains a variety of information required by this invention to provide applications services. The routing of the control messages is defined in the User Event Trigger Table (UETT) 310 which serves as a message routing table to Application Services Control Environment (ASCE) applications. The User Subscription Table 320 provides a list of subscribed applications and the operating status of the application relative to the Customer Service Environment (CSE). A Scheduled Applications Map 330 is provided to initiate time scheduled applications such as call forwarding by time of day. Interface and data base managers are provided for the administrator 800, customer 900 and Customer Service Environment 700.

The basic profile located in the CSE is termed the Subscriber Personal Profile (SPP), 300. It includes data providing user identification, terminal characteristics, applications, program, interest, and billing data bases. Application Profile Directories (APD) are provided for system wide, group, and individual services. The System Application Profile Directory (SAPD) 100 provides the system applications profile directory structure. The Group Application Profile Directory (GAPD) 110 provides the group level applications profile directory structure, similar to the SAPD. The Individual Applications Profile Directory (IAPD) provides a similar structure for individually created applications and includes a directory which identifies the location of the highly distributed Subscriber Personal Profile (SPP) data shown in FIG. 3.

In FIG. 3, other data base tables are used by the User Agent to operate efficiently. These are the User Event Trigger Table (UETT) 310, the User Subscription Table (UST) 320, and the SAM 330. The UST provides the status of application subscription and the running status of the application to the User Agent. The UETT provides the message routing table which indicates to the User Agent which applications are to be notified by the message when an event occurs. It is constructed from the Application Profile Directories (APD) table and maps events into the applications which require messages. Other profile data 170 needed by the application are identified in the directory.

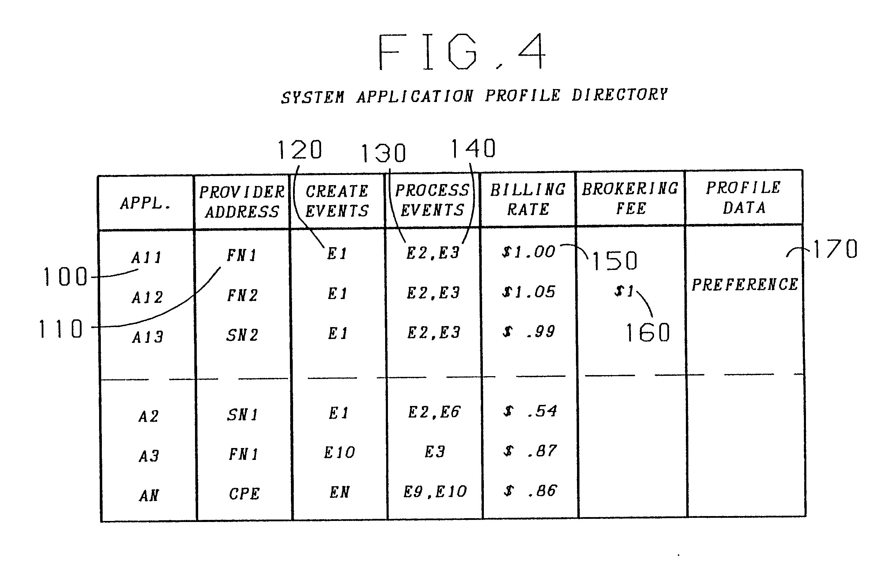

The SAPD is further explained by FIG. 4. Applications Providers list their applications 100 in the SAPD. This directory includes the service provider and network address 110.

It provides the necessary system data to associate an application 100 with the provider address 110 and the events which initiate the application 120. It also identifies process events required by application during execution 130 and 140. When brokering is performed, the billing rate 150, brokering fee 160 and profile data 170 are used by the Network Service Environment broker to determine the criteria form which the application provider will be selected.

In addition, event data to initiate the running of the application 120 and event data required by the application 130 and 140 are identified. The provider can identify service rates 150 as the network service provider can also identify brokering fees 160 associated when the selection of one member of a class of services of the same kind is to be made. For example, in this FIG., three type A1 applications are listed which differ only by provider and by fee schedule.

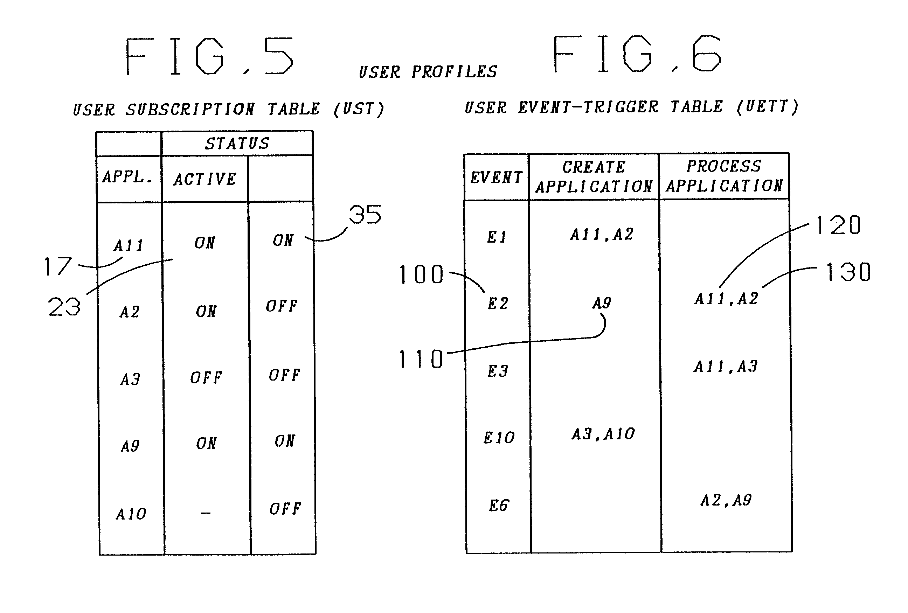

FIG. 6 illustrates the structure of the User Event Trigger Table (UETT) used by the User Agent during execution. In this invention, events can include stimuli, messages, alarms and data. The UETT is the message routing table used to efficiently distribute data to the Application Services Control Environment (ASCE) applications. It translates the event 100 to the applications 110, 120, 130 which require information. A9 is an example of an application initiated when an event E2 occurs. The UETT efficiently provides the message routing table by mapping events to the applications which are initiated by the event occurrence, and the events which are to be sent to the applications during the session. The UETT is constructed by a subscription process which reads from the appropriate Application Profile Directories (APD) and builds the UETT. This may occur dynamically and does not require Network Service Provider provisioning.

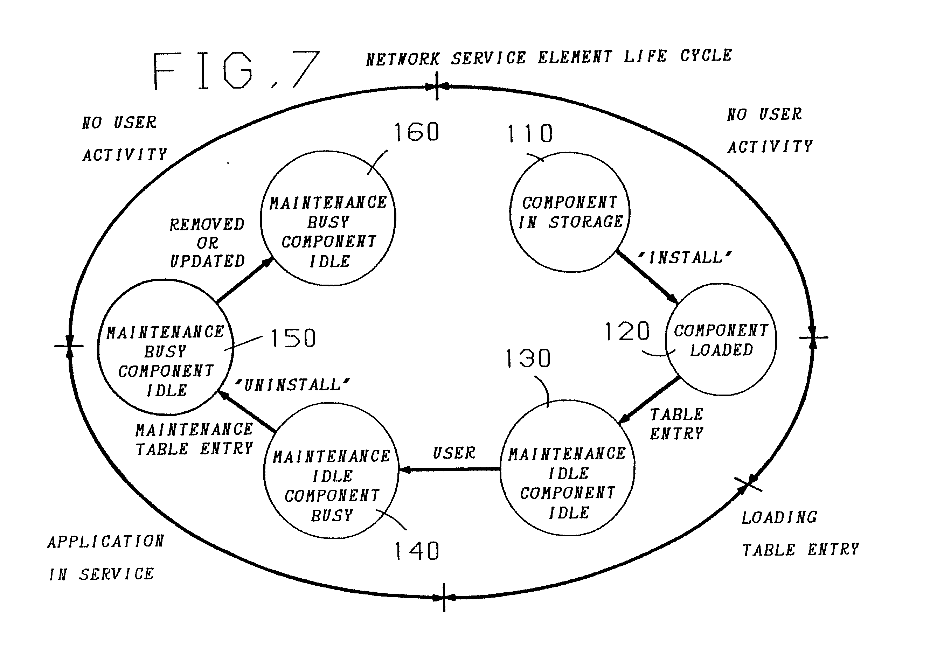

FIG. 7 illustrates the service element life cycle. Initially, an application implemented as a component 110 is installed 120. Before turn-up occurs, diagnostics is run to verify operation. The component moves into a service active state 130. As customer traffic increases, the component becomes traffic busy 140. When the component is to be removed from service, it is marked maintenance busy to prevent new traffic from accessing the component while existing traffic is supported. The service element can be removed only when all service traffic is reduced to zero 150 to 160. In this invention, all hardware and software service elements are treated as network components. That is, they may be taken from storage, installed and diagnosed before certification and linking into the system. After diagnostics are passed the Network Services Environment (NSE) may load the process into the appropriate Application Profile Directories (APD) so that it can provide service. During service, the component will have zero or more users at any instant in time. When maintenance is to be performed, such as occurs during a program upgrade, or redistribution for traffic load balancing, the component may be removed from service. If a replacement service element is to be installed, it is loaded similarly and the Application Profile Directory (APD) entry for the old component is rewritten to divert new service traffic to the new component. To avoid affecting current users receiving service, the maintenance state of the component is changed 150. This state for the component is maintained until all users have completed their service request. Thereafter, the component may enter the final state 160 at which time it can be removed.

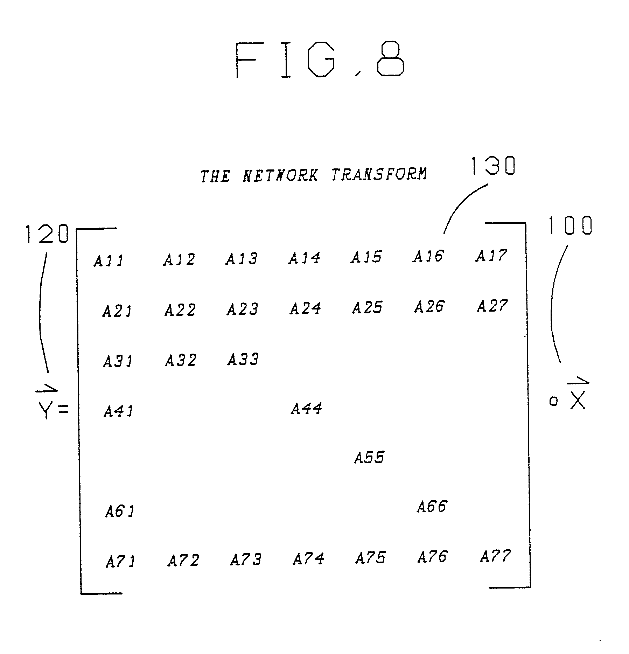

FIG. 8 illustrates the concept of the network transform 130 as one value added service of the invention. It provides a transformation of the multiple layers of a service element interface 100 to that of another service element or with that of an endpoint such as a customer 120. The intelligent network must ensure interface conformance between all such elements, applications and endpoints. This model from the interface definition for each element can be used to compute the necessary interworking services such as protocol or media conversion as well as transport services to find the elements in the desired service network. Control and information ports of all elements provide an interface represented by a layered model, such as the seven layer OSI model. When elements are to be network connected, designated X, 100, and Y, 120, the network provides a transformation function. When the representation for X and Y are conformal across all layers, then the pure transport function is provided and the function, 130, becomes the identity matrix. When the interface protocols are not conformal, then the transform 130 takes on a different form. When different suites are used at the two interfaces, the Network Transform will become a diagonal matrix with non-unity elements along the diagonal. When protocol suites which are not conformal in layer need to be interworked, such as occurs between SNA and X.25, then off diagonal elements appear. The Network Services Environment (NSE) identifies and locates interworking services elements to provide the required transform.

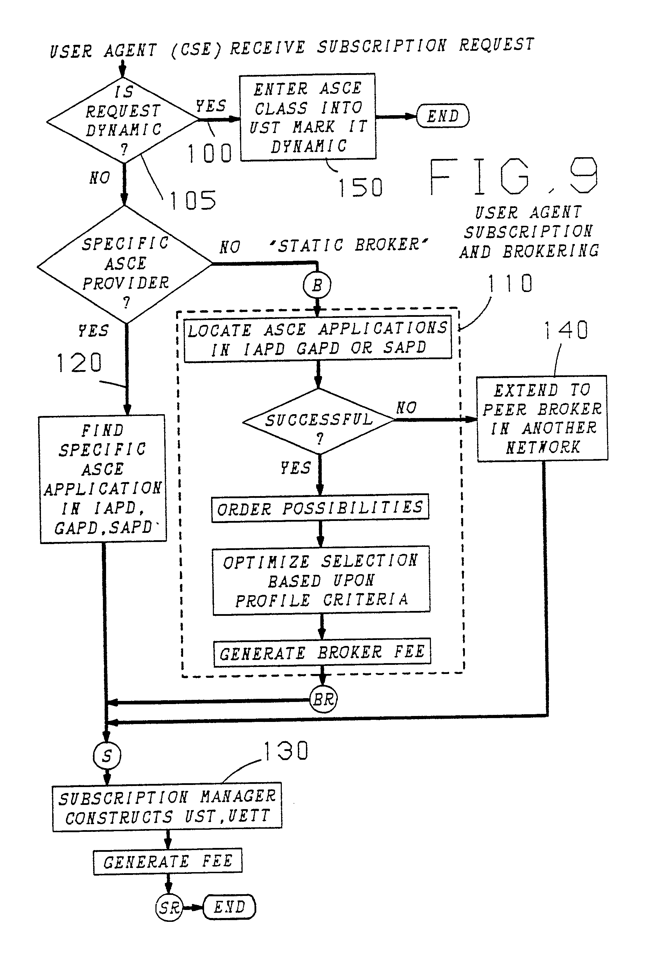

FIG. 9 illustrates the operation of the User Agent in the Customer Service Environment (CSE). Two forms of service subscriptions are available: dynamic and static. The dynamic service subscription entails the selection of the service provider application at each invocation. A static service subscription determines the service provider at subscription time until resubscription occurs. When a request for a dynamic service subscription is received 100, the application is entered into the UST, 150, and marked to be dynamic. When a static service subscription request is received and the provider is not specified, via the branch, 105-120, the UETT and UST tables are updated based on the directory information. If a static service is requested without specifying the provider, then the ASCE broker, 110, is used to select the provider based on user described criteria. The UETT and UST tables are then updated. If a provider cannot be successfully located, then a means is provided to extend to another network to locate a service provider, 140. Service requests for static services are served immediately by the User Agent without the need for further selection.

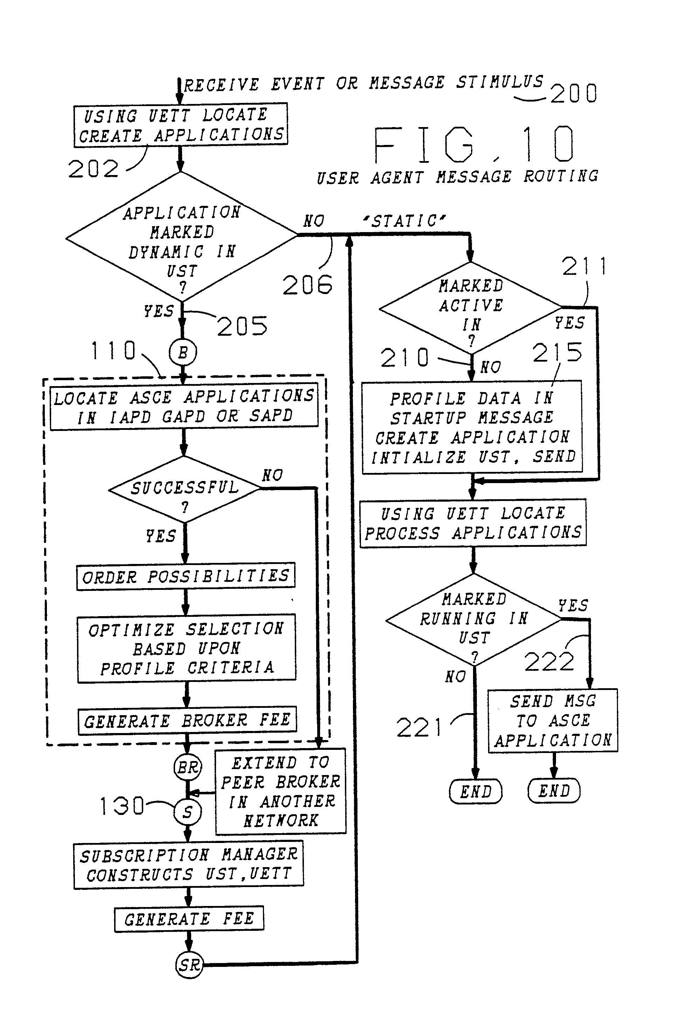

FIG. 10 illustrates User Agent Message Routing. The User Agent receives a event stimulus or message, 200, which is to be routed to appropriate applications. The User Agent reads the UETT to locate the applications to be initiated, 202. If the application has been marked dynamic, 205, then for each invocation the broker, 110, is called into use to select a provider, and the UETT is updated, 130. When the application is static, 206, then no brokering is required and it is marked active in the UST and a new process is created with a startup message, 215.

The UETT is read to identify processes that require the message, 200. An application that is running is sent a message, 222. If the user has temporarily shut-off the application, 221, then no message is routed to it.

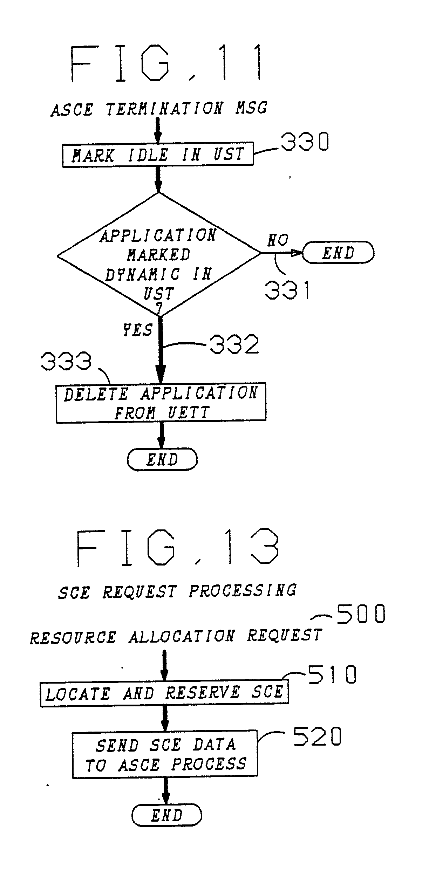

FIG. 11 illustrates the treatment of ASCE Termination Message. When an application is completed, it sends an application Terminated Message to the User Agent. The application entry in the UST is marked idle. If the application was marked to be dynamic, 332, then the UETT is updated to remove the entries, 333. If it was marked as static, then the application terminates without change to the UETT, 331.

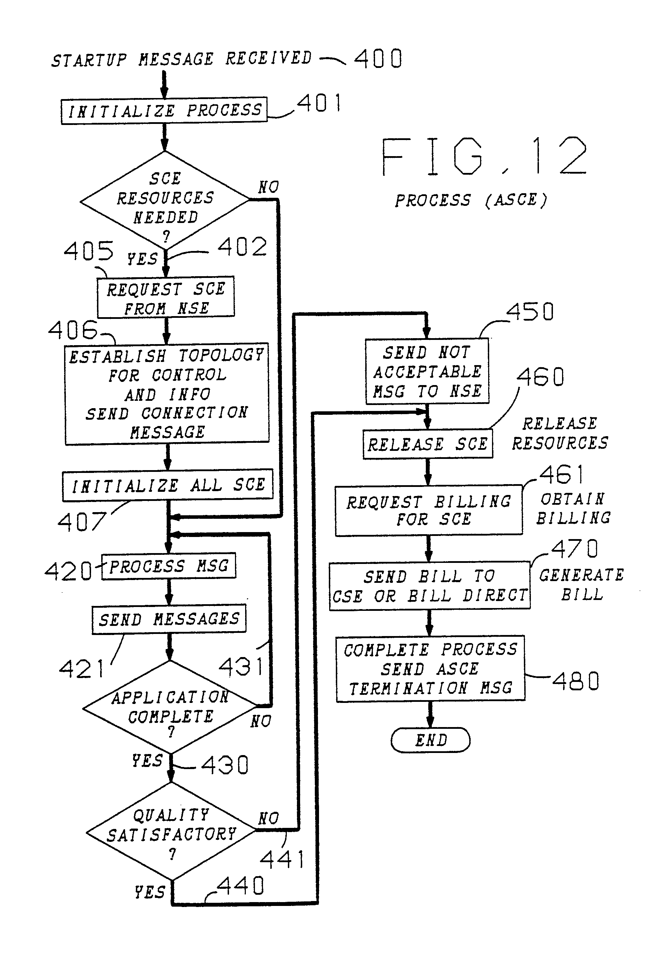

FIG. 12 illustrates the Application Services Control Environment Process. The startup message, 400, causes the application to initialize for the user session, 401. If the ASCE application requires external resources, it may request them from the Network Services Environment 405 and, upon confirmation, the application establishes the session topology 406 for the flow of control and information. The SCEs are then initialized by the application 407 and the ASCE process is now ready to execute.

Every message received is processed by the application, 420, and 421 until it is completed. After completion, 430, a mechanism is provided for feedback, 440 and 450, to update the knowledge database to be accessed by the broker and maintenance components. In this manner, the quality of service is improved with experience, and the intelligent network self adapts to minimize the likelihood of selecting unsatisfactory service elements. If SCE were required then they are released 460, and billing changes for the elements may be requested, 461. The application can then produce a total bill which can be sent to the CSE or the application may use the billing data for direct billing, 470. Finally, the ASCE Terminated Message is transmitted to the CSE, 480.

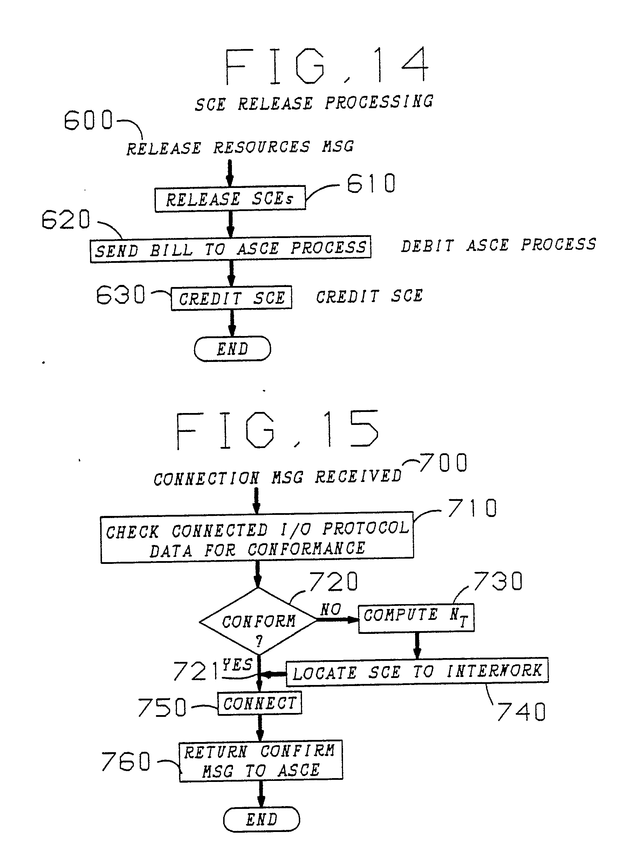

FIG. 13 illustrates the Processing of SCE resource requests by the NSE. When the resource request arrives, 500, the NSE must use the resource directories, reserve them, 510, and return a confirmation to the ASCE process, 520.

These resources may be network based or non-network based and provided by third parties.

FIG. 14 illustrates the NSE receipt of the Release SCE Message. The message arrives, 600, and the resource is released, 610. A bill for use of the SCE is returned and a debit is made by the accounting subsystem. When a third party has provided the resource, its account is credited for the service provided, 630, by the accounting subsystem.

FIG. 15 illustrates the treatment of the Connection Message by the NSE from the ASCE process. This flow chart illustrates the functions performed by the network to connect two endpoints when a connect message is received.

The connect message arrives 700, the NSE checks the end point resource tables for conformance, 710. If the interfaces do conform, 721, the connection is established 750, and a confirm message is returned to the application. Alternatively, when utilizing a packet network, rather than establishing the connection, the network address of each end point is returned. If conformance does not exist 720, the Network Transform (NT) is then used to compute the interworking needs, 730, and suitable interworking SCE must be located, 740 to create conformance, 750, by establishing the connection through the device. The confirm message is then returned to the ASCE application, 760.

## Claims

1. A method of performing applications and/or information services in a telecommunications services network having an operating system with multiple layers for providing network services, control, connectivity and communications
characterized by
providing a network service environment (NSE) and a programmable application management control (AMC) layer for enabling the implementation of application and/or service processes by service providers and customers for obtaining control of both network and non-network service elements for performing applications-specific work.

2. The method of claim 1 further characterized by including within the application management control layer an applications and services management environment (ASME) including customer service environment (CSE) for providing user agent control process which uses directives stored in a data base; and, an application services control environment (ASCE) for providing applications control processes, the applications control processes being adapted to reside in multiple nodes of the architecture.

3. The method of claim 2 further characterized by providing portability of the application control processes of the application services control environment and by deploying the network service environment (NSE) to provide a uniform operating environment.

4. The method of claim 2 further characterized by providing system, group and individual level access to the application services control environment, accessing the system level through a system application profile directory (SAPD); accessing the group level processes available to users assigned group membership or through a group application profile directory (GAPD); and accessing the individual level processes through an individual application profile directory (IAPD).

5. The method of claim 4 further Characterized By transforming entries from the directories dynamically into message routing table entries for message transmission to and from applications processes.

6. The method of claim 4 further Characterized By transmitting message transactions which distribute event occurrence information and data from the ASME to the Application Services Control Environment for applications which are being run.

7. The method of claim 6 further Characterized By transmitting message transactions from the Application Services Control Environment for providing control information to the network and to other applications being run.

8. The method of claim 1 further Characterized by including in said NSE a network transform service for computing interworking service needs in order to ensure interoperability between element interfaces.

9. The method of claim 2 further Characterized by

providing multiple selection processes (brokers) for selecting service provider, service capability elements, and interworking service elements where the selection of service provider is based upon customer profile directives, the selection of service capability elements is specified by the ASCE application process, and the selection of interworking service elements is based on a network transform service.

10. The method of claim 9 further Characterized by extending the service provider broker service to another network to couple the ASME together.

11. The method of claim 1 or 2 further Characterized by using said NSE to configure service elements in response to resource requests from the application process with the topology being specified by said process.

12. The method of claim 2 further Characterized by performing said control applications a multiple number of times; and utilizing the first received results, or utilizing the results of multiple concurrences.

13. The method of claim 1 or 2 further Characterized by adapting said NSE to provide for inserting and/or removing of service or applications control processes and for implementing service element by implementing the service element life cycle model.

14. The method of claim 2 further Characterized by enabling the ASME to allow both customer access and ASCE connectivity to the same node to permit the customer terminal to provide both communications and applications control.

15. The method of claim 1 further Characterized by providing said NSE with an accounting system service for all SCEs utilized by the application process and for all services rendered by the NSE, the ASCE provider, and the customer.

16. The method of claim 15 further Characterized by providing said NSE with bill rendering capability for an application services control environment (ASCE) provider to the customer.

17. A network operating system having multiple layers for performing applications and/or information processes for providing network services, control, connectivity and communications comprising a network service environment interconnected to a programmable application management control layer above the upper layer of an open system interconnect reference model for implementing control of both network and non-network service elements.

**18.** The system of claim 17 wherein said programmable application management control layer further comprises a control process which is determined by a user's directives stored in a data base, and an applications services control environment coupled to a customer services environment for effecting applications control processes which reside in multiple nodes of the system.

**19.** The system of claim 18 further Characterized In That
the Applications Services Control Environment is coupled to a system application profile directory to access the system level, is coupled to a group application profile directory to access the group level processes, and is coupled to an individual application profile directory to access the individual level processes.

# FIG. 1

DISTRIBUTED SERVICES NETWORK FOR PROVIDING INFORMATION SERVICES

EP 0 358 408 A2

FIG.2

PHYSICAL
ARCHITECTURE
OF THE DSNA

EP 0 358 408 A2

# FIG.3

DATA BASE PROFILE ARCHITECTURE OF THE DSNA

# FIG.4

SYSTEM APPLICATION PROFILE DIRECTORY

| APPL. | PROVIDER ADDRESS | CREATE EVENTS | PROCESS EVENTS | BILLING RATE | BROKERING FEE | PROFILE DATA |
|---|---|---|---|---|---|---|
| A11 | FN1 | E1 | E2,E3 | $1.00 | | |
| A12 | FN2 | E1 | E2,E3 | $1.05 | $1 | PREFERENCE |
| A13 | SN2 | E1 | E2,E3 | $ .99 | | |
| A2 | SN1 | E1 | E2,E6 | $ .54 | | |
| A3 | FN1 | E10 | E3 | $ .87 | | |
| AN | CPE | EN | E9,E10 | $ .86 | | |

EP 0 358 408 A2

# FIG.5

USER PROFILES

# FIG.6

## USER SUBSCRIPTION TABLE (UST)

| APPL. | STATUS | |
|---|---|---|
| | ACTIVE | |
| A11 | ON | ON |
| A2 | ON | OFF |
| A3 | OFF | OFF |
| A9 | ON | ON |
| A10 | – | OFF |

17, 23, 35

## USER EVENT-TRIGGER TABLE (UETT)

| EVENT | CREATE APPLICATION | PROCESS APPLICATION |
|---|---|---|
| E1 | A11,A2 | |
| E2 | A9 | A11,A2 |
| E3 | | A11,A3 |
| E10 | A3,A10 | |
| E6 | | A2,A9 |

100, 110, 120, 130

EP 0 358 408 A2

FIG.7    NETWORK SERVICE ELEMENT LIFE CYCLE

# FIG. 8

THE NETWORK TRANSFORM    130

$$\vec{Y} = \begin{bmatrix} A11 & A12 & A13 & A14 & A15 & A16 & A17 \\ A21 & A22 & A23 & A24 & A25 & A26 & A27 \\ A31 & A32 & A33 & & & & \\ A41 & & & A44 & & & \\ & & & & A55 & & \\ A61 & & & & & A66 & \\ A71 & A72 & A73 & A74 & A75 & A76 & A77 \end{bmatrix} \quad {}_\circ \vec{X}$$

120                                                                              100

USER AGENT (CSE) RECEIVE SUBSCRIPTION REQUEST

FIG.9

USER AGENT
SUBSCRIPTION
AND BROKERING

EP 0 358 408 A2

RECEIVE EVENT OR MESSAGE STIMULUS 200

FIG.10
USER AGENT MESSAGE ROUTING

USING UETT LOCATE CREATE APPLICATIONS

202

APPLICATION MARKED DYNAMIC IN UST ?

YES 205

206 'STATIC' NO

110

(B)

LOCATE ASCE APPLICATIONS IN IAPD GAPD OR SAPD

SUCCESSFUL ? NO

YES

ORDER POSSIBILITIES

OPTIMIZE SELECTION BASED UPON PROFILE CRITERIA

GENERATE BROKER FEE

(BR)

EXTEND TO PEER BROKER IN ANOTHER NETWORK

130 (S)

SUBSCRIPTION MANAGER CONSTRUCTS UST,UETT

GENERATE FEE

(SR)

MARKED ACTIVE IN ? 211

210 NO YES 215

PROFILE DATA IN STARTUP MESSAGE CREATE APPLICATION INTIALIZE UST, SEND

USING UETT LOCATE PROCESS APPLICATIONS

MARKED RUNNING IN UST ? YES

NO 222

221 SEND MSG TO ASCE APPLICATION

END    END

# FIG.11

ASCE TERMINATION MSG

MARK IDLE IN UST — 330

APPLICATION MARKED DYNAMIC IN UST ? — NO → END
331

YES ↓ 332

333 DELETE APPLICATION FROM UETT

END

# FIG.13

SCE REQUEST PROCESSING

— 500
RESOURCE ALLOCATION REQUEST

LOCATE AND RESERVE SCE — 510

SEND SCE DATA TO ASCE PROCESS — 520

END

STARTUP MESSAGE RECEIVED ~ 400

INITIALIZE PROCESS _401

FIG.12

PROCESS (ASCE)

SCE RESOURCES NEEDED ? — NO

405 YES    402

REQUEST SCE FROM NSE

406 ~

ESTABLISH TOPOLOGY FOR CONTROL AND INFO SEND CONNECTION MESSAGE

INITIALIZE ALL SCE

407

420 ─ PROCESS MSG

SEND MESSAGES

421    431

APPLICATION COMPLETE ? NO

YES ─ 430

QUALITY SATISFACTORY ? NO

441

YES 440

450

SEND NOT ACCEPTABLE MSG TO NSE

460

RELEASE SCE    RELEASE RESOURCES

461 OBTAIN BILLING

REQUEST BILLING FOR SCE

470 GENERATE BILL

SEND BILL TO CSE OR BILL DIRECT

COMPLETE PROCESS SEND ASCE TERMINATION MSG ─ 480

END

# FIG.14

*SCE RELEASE PROCESSING*

$600$ — *RELEASE RESOURCES MSG*

*RELEASE SCEs* — $610$

$620$ — *SEND BILL TO ASCE PROCESS*     *DEBIT ASCE PROCESS*

$630$ — *CREDIT SCE*     *CREDIT SCE*

*END*

# FIG.15

*CONNECTION MSG RECEIVED* — $700$

*CHECK CONNECTED I/O PROTOCOL DATA FOR CONFORMANCE* — $710$

$720$     $730$

*CONFORM ?* — *NO* → *COMPUTE $N_T$*

$721$ *YES*     *LOCATE SCE TO INTERWORK*

$750$ — *CONNECT*     $740$

$760$ — *RETURN CONFIRM MSG TO ASCE*

*END*